# EUROPÄISCHE PATENTSCHRIFT

(11) **EP 1 286 781 B1**
(45) Veröffentlichungstag und Bekanntmachung des Hinweises auf die Patenterteilung: **27.10.2004**
(21) Anmeldenummer: 01940444.1
(22) Anmeldetag: 10.05.2001
(51) Int. Cl.: B04B 7/12, B04B 1/04, B04B 1/10, B04B 3/00, B04B 11/06

(54) **ZENTRIFUGE MIT SIEBANORDNUNG UND VERFAHREN ZU DEREN BETRIEB**
CENTRIFUGE WITH A SIEVE SYSTEM AND METHOD FOR OPERATING THE SAME
CENTRIFUGEUSE AVEC ENSEMBLE TAMIS ET SON PROCEDE DE FONCTIONNEMENT

(30) Priorität: 08.06.2000 DE 10027958
(43) Veröffentlichungstag der Anmeldung: 05.03.2003
(73) Patentinhaber: Westfalia Separator AG, 59302 Oelde (DE)
(72) Erfinder: MACKEL, Wilfried, 59302 Oelde (DE); HAMATSCHEK, Jochen, 59302 Oelde (DE)
(74) Vertreter: Specht, Peter, Dipl.-Phys.
(86) Internationale Anmeldenummer: PCT/EP2001/005332
(87) Internationale Veröffentlichungsnummer: WO 2001/094024

(56) Entgegenhaltungen:
- EP-A- 0 289 674
- DE-B- 1 247 966
- DE-B- 2 913 406
- GB-A- 1 440 593
- US-A- 3 669 879

## Beschreibung

Die Erfindung betrifft eine Zentrifuge, insbesondere Separator, nach dem Oberbegriff des Anspruches 1 und ein Verfahren nach dem Oberbegriff des Anspruches 16.

Eine Zentrifuge der gattungsgemäßen Art ist aus der DE-B-1 247 966 bekannt.

Aus der DE-B-29 13 406 ist es ferner bekannt, daß Separatoren Kolbenschieber zum Verschließen der Schleudertrommel einsetzen.

Die US-A-3 669 879 beschreibt eine Filterzentrifuge mit Membranscheiben, die an einem Trägerzylinder gehalten werden.

Aus der DE 25 29 614 C2 ist ferner eine Vorrichtung zur kontinuierlichen Rotations-Druckfiltration flüssiger Medien bekannt.

Eine Zentrifuge der vorstehenden angegebenen Art und ein Verfahren zu deren Betrieb sind aus der DE 25 29 614 C2 bekannt. Diese Schrift beschreibt eine Vorrichtung zur kontinuierlichen Rotations-Druckfiltration flüssiger Medien. Unter Filtration im Sinne dieser Schrift sind sowohl Sieb- als auch Membranfiltrationen sowie Mikro- oder Ultrafiltrationen zu verstehen. Durch eine hydrostatische Druckdifferenz wird eine Konzentratstromkomponente parallel zur Oberfläche des Filters erzeugt, wozu ein hydrodynamischer Förderdruck im Ringspalt zwischen der Zenrifugentrommel und dem koaxialen trommelförmigen Filterelement dadurch erzeugt wird, daß die Trommel und das Filterelement gleichzeitig mit voneinander verschiedenen Drehfrequenzen beaufschlagt werden. Ohne die unabhängige Relativverdrehbarkeit würde angeblich zwischen den Filtern eine nur so wenig effektive stark oberflächenlaminare Querstromkomponente entstehen, daß dem Fraktionierungsvorgang bereits kurz nach dem Beginn der Filtration durch Polarisationseffekte und Porenverschluß zum Erliegen käme.

Die separate Drehbarkeit der Siebtrommel bedingt einen hohen konstruktiven Aufwand und erhöht damit die Kosten der Zentrifuge in einem erheblichen Maße. Unter anderem aus diesem Grund hat sich nach einer Erkenntnis der Erfindung die beschriebene Lösung in der Praxis nicht durchgesetzt.

Anzumerken ist ferner, daß trotz der relativen Drehbarkeit der Siebtrommel zur Schleudertrommel des öfteren ein Rückspülen der Membran mit einer Spülflüssigkeit notwendig ist. Ein derartiges Rückspülen ist aber aufwendig und unterbricht den Schleudervorgang für einen nicht unbeträchtlichen Zeitraum.

Die Erfindung hat die Aufgabe, die eingangs beschriebene Zentrifuge derart weiterzuentwickeln, daß eine konstruktiv einfache Siebanordnung geschaffen wird, bei die Feststoffe leicht aus dem Siebbereich abströmen können und der Porenverschluß reduziert wird. Ferner soll ein vorteilhaftes Verfahren zum Reinigen der Zentrifuge geschaffen werden.

Die Erfindung löst diese Aufgabe in Hinsicht auf die Zentrifuge durch den Gegenstand des Anspruches 1 und in Hinsicht auf das Verfahren durch den Gegenstand des Anspruches 16.

Vorteilhafte Weiterbildungen sind den Unteransprüchen zu entnehmen.

Der Gegenstand des Anspruches 1 ermöglicht die Verwendung von Siebanordnungen auch in selbstentleerenden Zentrifugen mit Kolbenschiebern, da durch die baulich stabile Membranscheibenanordung eine Zerstörung der Siebteller, durch die bei der raschen Entleerung auftretenden starken Kräfte vermieden wird. Somit wird die Kombination moderner Kolbenschieber-Separatoren mit der Idee eines Membrantellereinsatzes geschaffen.

So wird die Siebanordnung derart ausgelegt und angeordnet, daß die Strömungsrichtung des Schleudergutes aus dem Verteiler und die Strömungsrichtung von an Siebkörpem der Siebanordnung abgeschiedenen Partikeln gleichgerichtet ist. Dies bedingt Vorteile hinsichtlich des störungsfreien Transports, der nicht gegen eine Strömung erfolgen muß, wie dies bei verschiedenen anderen Konstruktionen der Fall ist. Auch ist eine separate Drehbarkeit der Siebanordnung relativ zur Trommel wie beim gattungsgemäßen Stand der Technik nicht mehr erforderlich.

Vorzugsweise sind die als Membranteller ausgelegten Siebteller der Siebanordnung aus Keramik und die Siebteller sind im wesentlichen radial zum Zulaufrohr und/oder Verteiler angeordnet.

Durch die Strömungsrichtung des Schleuder- und Aufgabegutes zwischen den Membrantellem (bzw. an den Außenseiten des äußersten Membrantellers) nach außen ist die Strömungsrichtung mit den an der Membran abgeschiedenen Feststoffen, deren Transport durch die Zentrifugalwirkung nach außen erfolgt, gleich gerichtet.

Zum Verschließen der Schleudertrommel dient der Kolbenschieber und es kann eine Feststoff angereicherte Phase aus einem Feststoffraum der Schleudertrommel ergänzend über Öffnungen - vorzugsweise Düsen - am Außendurchmesser des Feststoffraumes und/oder über Kanäle/Bohrungen zum Schleuderkopf hin abgeleitet werden. Zu einer derartigen Ableitung mittels Düsen am Kolbenschieber sei daher auf die DE 22 14 487 verwiesen.

Zur Reinigung wird wie auch zum Ableiten der Feststoffe wird der Schleuderraum durch Öffnen des Kolbenschiebers geöffnet, so daß an dem Sieb angesetzte und/oder angelagerte Feststoffe und/oder Verunreinigungen (und u.U. auch Verstopfungen, Anbackungen) durch die (vom Kolbenschieber freigegebenen) Öffnungen abgeleitet werden.

Ein Vorteil dieser Reinigung ist darin zu sehen, daß sie ohne den zusätzlichen Einsatz einer Spülflüssigkeit durchgeführt werden kann und daß erst nach einem relativ langen Betrieb ein Spülen mit einer Spülflüssigkeit erforderlich ist.

Hervorzuheben ist noch, daß es aufgrund der modernen Steuerungstechnik möglich ist, den Entleerungsmechanismus sehr genau zu steuern und derart auch die Reinigungseffekte in einer gewünschten Art und Weise zu kontrollieren. Hierdurch wird eine hohe Standzeit des Membraneinsatzes erreicht, ohne daß verstopfungsbedingt ein Produktionsstop erforderlich ist. Durch die Schnelligkeit des Entleerungsmechanismus und die mögliche Regelung des Austragsvolumens kann die Intensität des Reinigungseffektes produktabhängig gesteuert werden.

Als weitere Variante der Erfindung ist die Ableitung des Konzentrats über einen Scheideteller oder Röhrchen, Kanäle und Düsen außerhalb des Membraneinsatzes denkbar. Dieses kann produktabhängig zur Verlängerung der Rückspülungsabstände (Entleerungsabstände) führen. Auch eine Automatisierung der Entleerungszeitpunkt ist durch Überwachung der dort abgeleiteten Phase möglich.

Als weitere Alternative ist die Abfuhr eines Teilstromes des Konzentrats über Düsen denkbar.

Die Membranteller können sowohl einzeln als auch als vormontierte Einheit in die Schleudertrommel montiert werden. Letzteres bietet naturgemäß Vorteile bei der Montage/Demontage.

Die Erfindung kombiniert insbesondere in einfacher Weise die an sich bekannte Technologie moderner Kolbenschieberseparatoren mit der Idee eines Membrantellereinsatzes und schafft derart eine Art "Membranseparator".

Bevorzugt weist der Feststoffsammelraum eine doppelt konische Form auf.

Die Erfindung schafft insbesondere auch ein Verfahren zum Reinigen einer erfindungsgemäßen Zentrifuge, bei welchem zum Reinigen des Siebes vorzugsweise ein Kolbenschieber der Zentrifuge geöffnet wird, so daß eine Rückströmung von Flüssigkeit durch das Sieb Anbackungen und/oder Verunreinigungen des Siebes löst.

Nachfolgend wird die Erfindung unter Bezug auf die Zeichnung anhand eines Ausführungsbeispiels näher beschrieben. Es zeigt:
- Fig. 1: einen Schnitt durch eine erfindungsgemäße Zentrifuge;
- Fig. 2a und 2b: zwei winklig zueinander versetzte Schnitte durch den Bereich der Membrantellersiebe.

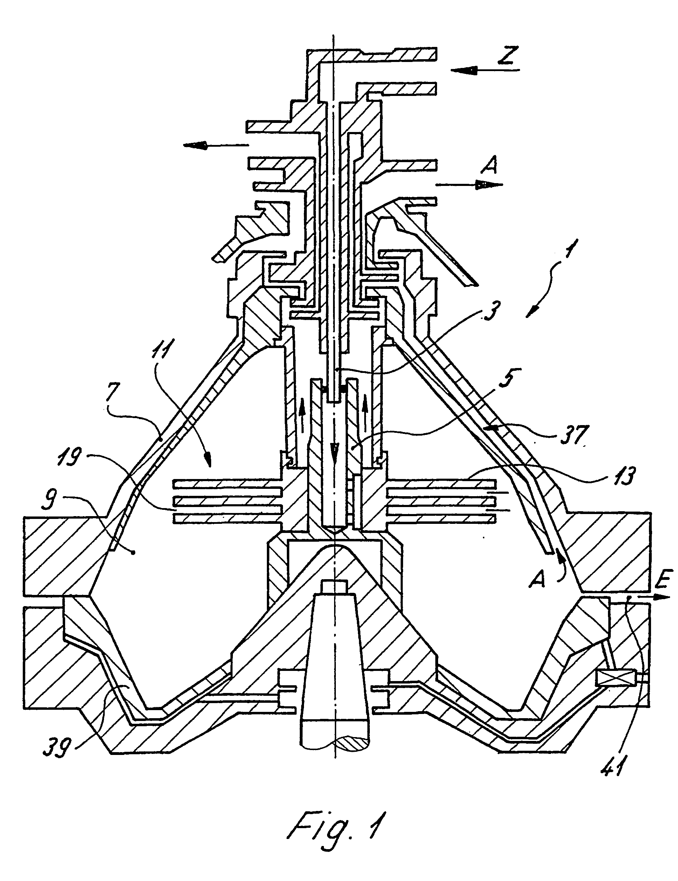

Fig. 1 zeigt einen Separator 1 mit einem Zulaufrohr 3, das in einen Verteiler 5 mündet, der zur Einleitung eines Schleudergutes in einen von einer Schleudertrommel 7 begrenzten, doppelt konisch ausgelegten Schleuderraum 9 dient, der mit einer Siebanordnung 11 - auch Membraneinsatz genannt - aus einem Keramikwerkstoff versehen ist.

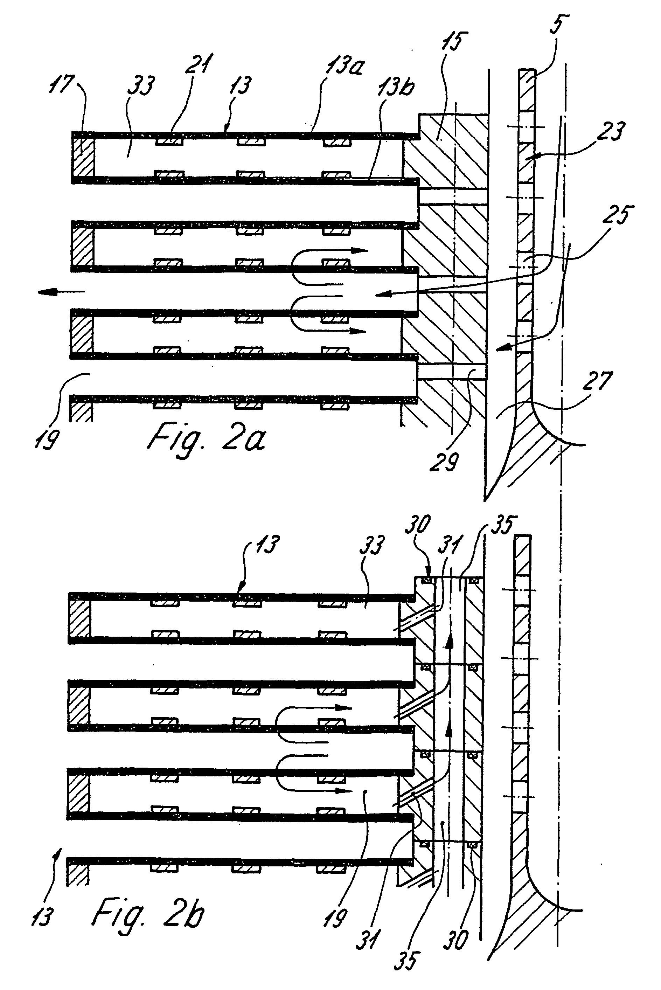

Die Siebanordnung 11 wird nach Fig. 1 aus drei axial zueinander beabstandeten, sich radial zum Zulaufrohr 3 und dem Verteiler 5 erstreckenden Membrantellern 13 gebildet. Fig. 2a und b zeigt die Membranteller, die jeweils auf Distanzringen 15 angeordnet sind, welche den Verteiler 5 umgeben und aus zwei axial voneinander beabstandeten Membranscheiben 13a, 13b bestehen, welche jeweils im Bereich ihres Außenumfanges über einen Distanzring 17 miteinander verbunden sind. Zwischen den Membrantellern 13 sind Ringspalte 19 ausgebildet. Die Membranscheiben 13a, 13b werden jeweils an den einander zugewandten Seiten jedes Membrantellers 13 durch Stützringe 21 stabilisiert.

Im vorliegenden Fall sind nach Fig. 1 rein beispielhaft drei Membranteller 13 vorgesehen. Aus Fig. 2 wird aber deutlich, daß auch eine größere Anzahl an Membrantellern 13 bei entsprechender Auslegung des Verteilers 5 des Separators 1 vorgesehen sein kann.

Der Verteiler 5 weist in seiner Wandung 23 radial ausgerichtete Bohrungen 25 auf, welche in mindestens einen vertikal zum Verteiler 5 an dessen Außenumfang verlaufenden Kanal 27 münden, der wiederum über Bohrungen/Kanäle 29 zwischen den Distanzringen 15 in die Ringspalte 19 zwischen den Membrantellern 13 mündet. Zwischen den Distanzringen 15 liegen Dichtungen 30 wie O-Ringe, Flachdichtungen. Es ist auch möglich, die Distanzringe 15 ohne Dichtungen direkt aufeinander zu legen und eine metallische Dichtheit zu erzeugen.

Die Distanzringe 15 sind nach dem winklig zur Fig. 2a versetzten Schnitt der Fig. 2b ferner mit winklig zu den Membrantellern 13 nach oben verlaufenden Ableitkanälen 31 versehen, welche den Ringraum 33 zwischen zwei zueinander gehörigen Membranscheiben 13a, 13b der Membranteller 13 mit einem vertikal in den Distanzringen 15 ausgebildeten Ableitkanal 35 für Flüssigkeit verbinden. Die Distanzringe 15 sind mittels Dichtungen 30 relativ zueinander abgedichtet. Die Kanäle 31, 35 sind hydraulisch getrennt zu den Zuleitkanälen 29 ausgebildet.

Im Bereich der Innenwandung der Schleudertrommel 7 kann ein Ableitsystem 37 zum Ableiten der festeren, aber noch fließfähigen Phase angeordnet sein.

An sich bekannte Kolbenschieber 39 ermöglichen im Übrigen das Ableiten von Feststoffen aus der Trommel durch radial nach außen führende Bohrungen 41 oder Schlitze in der Schleudertrommel 7.

Die Funktion dieser Anordnung ist wie folgt.

Schleudergut tritt durch das Zulaufrohr 3 und der Verteiler 5 und dessen Bohrungen 25 in den Kanal 27 und durch die Bohrungen/Kanäle 29 zwischen den Distanzringen 15 in die Ringspalte 19 zwischen den Membrantellern 13.

Von hier strömt das Schleudergut radial nach außen, wobei ein Teil des Schleudergutes in die Membranteller 13 eintritt, so daß ein Teil des Schleudergutes im Membrantellerbereich geklärt wird (Pfeile P). Durch die Kanäle 31 und 35 wird dieser Anteil der flüssigen Phase abgeleitet.

Der restliche Anteil des Schleudergutes (Feststoffe) tritt radial nach außen aus den Membrantellern Distanzringen in den Schleuderraum 9 durch die vorstehend beschriebenen Ableitsysteme kann abhängig vom Produkt die Feststoffphase abgeleitet werden. Durch die Strömungsrichtung des Schleuder- und Aufgabegutes zwischen den Membrantellern (bzw. an den Außenseiten des äußersten Membrantellers) nach außen ist die Strömungsrichtung mit den an der Membran abgeschiedenen Feststoffen nach außen gleich gerichtet (Pfeil F).

Beim Öffnen des Kolbenschiebers 39 werden die Feststoffe aus dem Feststoffsammelraum nach außen geleitet. Hierbei entsteht eine starke Strömung auch aus den Zwischenräumen 33 der Membranteller nach außen, wodurch an den Membrantellem 13 angelagerte Feststoffe gelöst und ebenfalls durch die Kolbenschieberöffnungen 41 nach außen geleitet werden.

Die Strömungsverhältnisse sind durch die Pfeile P sowie A (Ablauf Feststoffphase), F (Strömungsrichtung), E (Entleerungsphase ) und Z (Zulauf) dargestellt.

### Bezugszeichenliste

- Separator: 1
- Zulaufrohr: 3
- Verteiler: 5
- Schleudertrommel: 7
- Schleuderraum: 9
- Siebanordnung: 11
- Membranteller: 13
- Distanzring: 15
- Distanzring: 17
- Ringspalte: 19
- Stützringe: 21
- Wandung: 23
- Bohrungen: 25
- Kanal: 27
- Bohrungen/Kanäle: 29
- Dichtungen: 30
- Ableitkanäle: 31
- Ringraum: 33
- Ableitkanal: 35
- Ableitsystem: 37
- Kolbenschieber: 39
- Bohrungen: 41
- Pfeil (Zulauf): Z
- Pfeil (Ablauf Feststoffphase): A
- Pfeil (Strömungsrichtung): F
- Pfeil (Entleerungsphase ): E
- Pfeil: P

## Patentansprüche

1. Zentrifuge, insbesondere Separator,
a) mit einem Zulaufrohr (3) und/oder einem Verteiler (5) zur Einleitung eines Schleudergutes in eine Siebanordnung (11), die in einem von einer Schleudertrommel (7) begrenzten Schleuderraum (9) angeordnet ist,
b) die Siebanordnung (11) derart ausgelegt und angeordnet ist, daß die Strömungsrichtung des Schleudergutes aus dem Verteiler (5) und die Strömungsrichtung von an Siebkörpern der Siebanordnung abgeschiedenen Partikeln gleichgerichtet ist,
c) wobei die Siebanordnung eine Mehrzahl axial zueinander versetzter Siebteller (13) aufweist und wobei die Siebteller im wesentlichen radial zum Zulaufrohr (3) und/oder Verteiler (5) angeordnet sind,
**dadurch gekennzeichnet, daß**
d) ein Kolbenschieber (39) zum Verschließen der Schleudertrommel (7) vorgesehen ist,
e) daß die Siebteller als Membranteller (13) ausgelegt sind, welche mindestens zwei axial beabstandete Membranscheiben (13a, 13b) aufweisen,
f) wobei die Membranscheiben (13a, 13b) jeweils im Bereich ihres Außenumfanges über mindestens einen Distanzring (17) miteinander verbunden sind.

2. Zentrifuge nach Anspruch 1, **dadurch gekennzeichnet, daß** die Membranteller (13) aus Keramik bestehen.

3. Zentrifuge nach Anspruch 1 oder 2, **dadurch gekennzeichnet, daß** die Membranscheiben (13a, 13b) im Bereich ihres Innendurchmessers über mindestens einen Distanzring (15) miteinander verbunden sind.

4. Zentrifuge nach einem der vorstehenden Ansprüche, **dadurch gekennzeichnet, daß** zwischen den Membrantellern (13) Ringspalte (19) ausgebildet sind.

5. Zentrifuge nach einem der vorstehenden Ansprüche, **dadurch gekennzeichnet, daß** die am Innendurchmesser liegenden Distanzringe (15) Bohrungen (31, 35) zur Ableitung geklärter Flüssigkeit aufweisen.

6. Zentrifuge nach einem der vorstehenden Ansprüche, **dadurch gekennzeichnet, daß** die am Innendurchmesser liegenden Distanzringe (15) Kanäle (29) zur Zuleitung des Aufgabegutes zwischen die Membranteller (13) aufweisen.

7. Zentrifuge nach einem der vorstehenden Ansprüche, **dadurch gekennzeichnet, daß** die am Innendurchmesser liegenden Distanzringe (15) dichtungsfrei direkt übereinander liegen.

8. Zentrifuge nach einem der Ansprüche 1 - 6, **dadurch gekennzeichnet, daß** zwischen den am Innendurchmesser liegenden Distanzringen (15) Dichtungen 30) angeordnet sind.

9. Zentrifuge nach Anspruch 8, **dadurch gekennzeichnet, daß** die zwischen den am Innendurchmesser liegenden Distanzringen (15) angeordneten Dichtungen (30) Flachdichtungen oder O-Ringe sind.

10. Zentrifuge nach einem der vorstehenden Ansprüche, **dadurch gekennzeichnet, daß** der Verteiler (2) in seiner Wandung (23) Bohrungen (25) aufweist, welche direkt oder über weitere Bohrungen/Kanäle (29) in die Ringspalte (19) zwischen den Membrantellern (13) münden.

11. Zentrifuge nach einem der vorstehenden Ansprüche, **dadurch gekennzeichnet, daß** die am Innendurchmesser liegenden Distanzringe (15) mit Ableitkanälen (31) versehen sind, welche einen Ringraum (33) zwischen den Membranscheiben (13a, 13b) der Membranteller (13) mit einem Ableitsystem (37) zum Ableiten flüssiger Phase verbinden.

12. Zentrifuge nach einem der vorstehenden Ansprüche, **dadurch gekennzeichnet, daß** die Ableitkanäle (31, 35) hydraulisch getrennt zu den Zuleitkanälen (29) ausgebildet sind.

13. Zentrifuge nach einem der vorstehenden Ansprüche, **dadurch gekennzeichnet, daß** eine feststoffangereicherte Phase aus einem Feststoffraum (9) der Schleudertrommel (7) über Öffnungen (41) im Kolbenschieber (39) durch Öffnen der Kolbenschieber diskontinuierlich ableitbar ist und/oder über Kanäle (37)/Bohrungen oder Düsen im Außenbereich des Schleuderraumes (9) kontinuierlich abgeleitet wird.

14. Zentrifuge nach einem der vorstehenden Ansprüche, **dadurch gekennzeichnet, daß** die Öffnungen (41) im Kolbenschieber (39) düsenartig ausgelegt sind.

15. Zentrifuge nach einem der vorstehenden Ansprüche, **dadurch gekennzeichnet, daß** die Membranteller (13) einzeln oder zu mehreren als vormontierte Einheit ausgebildet und in die Sehleudertrommel (7) eingesetzt sind.

16. Verfahren zum Reinigen einer Zentrifuge nach einem der vorstehenden Ansprüche, **dadurch gekennzeichnet, daß** zum Reinigen der Siebanordnung vorzugsweise ein Kolbenschieber der Zentrifuge geöffnet wird, so daß ein Rückströmen von Flüssigkeit durch die Siebanordnung Anbackungen an der Siebanordnung und/oder Verunreinigungen aus derselben löst.

## Claims

1. Centrifuge, in particular, separator,
a) having a feed pipe (3) and/or a distributor (5) for introducing a material to be centrifuged into a screen arrangement (11), which is arranged in a centrifuging space (9) delimited by a centrifuging drum (7),
b) the screen arrangement (11) is designed and arranged in such a manner that the direction of flow of the material to be centrifuged out of the distributor (5) and the direction of flow of particles separated out at screen bodies of the screen arrangement are oriented in the same direction,
c) the screen arrangement having a plurality of screen plates (13) which are axially offset with respect to one another, and the screen plates being arranged substantially radially with respect to the feed pipe (3) and/or distributor (5),
**characterized in that**
d) there is a piston slide (39) for closing the centrifuging drum (7),
e) **in that** the screen plates are designed as membrane plates (13) which have at least two membrane discs (13a, 13b) at an axial distance from one another,
f) the membrane discs (13a, 13b) each being connected to one another by means of at least one spacer ring (17) in the region of their outer circumference.

2. Centrifuge according to Claim 1, **characterized in that** the membrane plates (13) consist of ceramic.

3. Centrifuge according to Claim 1 or 2, **characterized in that** the membrane discs (13a, 13b) are connected to one another by means of at least one spacer ring (15) in the region of their internal diameter.

4. Centrifuge according to one of the preceding claims, **characterized in that** annular gaps (19) are formed between the membrane plates (13).

5. Centrifuge according to one of the preceding claims, **characterized in that** the spacer rings (15) located at the internal diameter have holes (31, 35) for discharging clarified liquid.

6. Centrifuge according to one of the preceding claims, **characterized in that** the spacer rings (15) located at the internal diameter have passages (29) for supplying the charge material between the membrane plates (13).

7. Centrifuge according to one of the preceding claims, **characterized in that** the spacer rings (15) located at the internal diameter are located directly above one another, without any seals.

8. Centrifuge according to one of Claims 1 - 6, **characterized in that** seals (30) are arranged between the spacer rings (15) located at the internal diameter.

9. Centrifuge according to Claim 8, **characterized in that** the seals (30) arranged between the spacer rings (15) located at the internal diameter are flat seals or 0-rings.

10. Centrifuge according to one of the preceding claims, **characterized in that** the distributor (2) has, in its wall (23), holes (25) which open out into the annular gaps (19) between the membrane plates (13) either directly or via further holes/passages (29).

11. Centrifuge according to one of the preceding claims, **characterized in that** the spacer rings (15) located at the internal diameter are provided with discharge passages (31) which connect an annular space (33) between the membrane discs (13a, 13b) of the membrane plates (13) to a discharge system (37) for discharging liquid phase.

12. Centrifuge according to one of the preceding claims, **characterized in that** the discharge passages (31, 35) are designed so as to be hydraulically separate from the feed passages (29).

13. Centrifuge according to one of the preceding claims, **characterized in that** a solid-enriched phase can be discharged discontinuously from a solid space (9) of the centrifuging drum (7) via openings (41) in the piston slide (39) by opening the piston slides and/or is discharged continuously via passages (37)/holes or nozzles in the outer region of the centrifuging space (9).

14. Centrifuge according to one of the preceding claims, **characterized in that** the openings (41) in the piston slide (39) are configured in the style of nozzles.

15. Centrifuge according to one of the preceding claims, **characterized in that** the membrane plates (13), individually or in groups, are designed as a preassembled unit and inserted in the centrifuging drum (7).

16. Method for cleaning a centrifuge according to one of the preceding claims, **characterized in that** to clean the screen arrangement, it is preferable for a piston slide of the centrifuge to be opened, so that a backflow of liquid through the screen arrangement removes or dissolves caking on the screen arrangement and/or contaminants therefrom.

## Revendications

1. Centrifugeuse, en particulier séparateur,
a) avec un tuyau d'amenée (3) et/ou un distributeur (5) destiné à l'introduction d'un produit centrifugé dans un dispositif de tamis (11) qui est disposé dans une chambre de centrifugation (9) limitée par un tambour de centrifugeuse (7),
b) le dispositif de tamis (11) est conçu et disposé de telle manière que le sens du flux du produit centrifugé provenant du distributeur (5) et le sens du flux des particules séparées au niveau des corps de tamis du dispositif de tamis sont dirigés dans la même direction,
c) le dispositif de tamis présentant une pluralité de plaques de tamis (13) décalées axialement les unes par rapport aux autres et les plaques de tamis étant disposées pour l'essentiel radialement par rapport au tuyau d'amenée (3) et/ou au distributeur (5),
caractérisée en ce
d) qu'un tiroir à piston (39) est prévu en vue de la fermeture du tambour de centrifugeuse (7),
e) que les plaques de tamis sont conçues sous forme de plaques de membrane (13) qui présentent au moins deux plateaux de membrane (13a, 13b) écartés axialement,
f) les plateaux de membrane (13a, 13b) étant reliés les uns avec les autres à chaque fois dans la zone de leur circonférence extérieure via au moins une bague d'espacement (17).

2. Centrifugeuse selon la revendication 1, **caractérisée en ce que** les plaques de membrane (13) se composent de céramique.

3. Centrifugeuse selon la revendication 1 ou 2, **caractérisée en ce que** les plateaux de membrane (13a, 13b) sont reliés les uns avec les autres dans la zone de leur diamètre intérieur via au moins une bague d'espacement (15).

4. Centrifugeuse selon l'une quelconque des revendications précédentes, **caractérisée en ce que** des fentes annulaires (19) sont réalisées entre les plaques de membrane (13).

5. Centrifugeuse selon l'une quelconque des revendications précédentes, **caractérisée en ce que** les bagues d'espacement (15) se trouvant au niveau du diamètre intérieur présentent des alésages (31, 35) destinés à la dérivation du liquide purifié.

6. Centrifugeuse selon l'une quelconque des revendications précédentes, **caractérisée en ce que** les bagues d'espacement (15) se trouvant au niveau du diamètre intérieur présentent des canaux (29) destinés à l'amenée du produit alimenté entre les plaques de membrane (13).

7. Centrifugeuse selon l'une quelconque des revendications précédentes, **caractérisée en ce que** les bagues d'espacement (15) se trouvant au niveau du diamètre intérieur sont superposées directement sans joint.

8. Centrifugeuse selon l'une quelconque des revendications 1 à 6, **caractérisée en ce que** des joints (30) sont disposés entre les bagues d'espacement (15) se trouvant au niveau du diamètre intérieur.

9. Centrifugeuse selon la revendication 8, **caractérisée en ce que** les joints (30) disposés entre les bagues d'espacement (15) se trouvant au niveau du diamètre intérieur sont des joints plats ou dés joints toriques.

10. Centrifugeuse selon l'une quelconque des revendications précédentes, **caractérisée en ce que** le distributeur (2) présente des alésages (25) dans sa paroi (23) qui débouchent directement ou via d'autres alésages/canaux (29) sur les fentes annulaires (19) entre les plaques de membrane (13).

11. Centrifugeuse selon l'une quelconque des revendications précédentes, **caractérisée en ce que** les bagues d'espacement (15) se trouvant au niveau du diamètre intérieur sont munies de canaux de dérivation (31) qui relient un espace annulaire (33) entre les plateaux de membrane (13a, 13b) des plaques de membrane (13) à un système de dérivation (37) en vue de la dérivation de la phase liquide.

12. Centrifugeuse selon l'une quelconque des revendications précédentes, **caractérisée en ce que** les canaux de dérivation (31, 35) sont réalisés de manière séparée hydrauliquement par rapport aux canaux d'amenée (29).

13. Centrifugeuse selon l'une quelconque des revendications précédentes, **caractérisée en ce qu'**une phase enrichie en matière solide est dérivable de manière discontinue à partir d'une chambre de matière solide (9) du tambour de centrifugeuse (7) via des ouvertures (41) dans le tiroir à piston (39) par ouverture du tambour de centrifugeuse et/ou est dérivée en continu via des canaux (37)/alésages ou des gicleurs dans la zone extérieure de la chambre de centrifugation (9).

14. Centrifugeuse selon l'une quelconque des revendications précédentes, **caractérisée en ce que** les ouvertures (41) sont conçues de type gicleur dans le tiroir à piston (39).

15. Centrifugeuse selon l'une quelconque des revendications précédentes, **caractérisée en ce que** les plaques de membrane (13) sont réalisées séparément ou en plusieurs parties sous forme d'unité préassemblée et insérées dans le tambour de centrifugeuse (7).

16. Procédé de nettoyage d'une centrifugeuse selon l'une quelconque des revendications précédentes, **caractérisé en ce qu'**un tiroir à piston de la centrifugeuse est de préférence ouvert en vue du nettoyage du dispositif de tamis de manière à ce qu'un retour du courant de liquide à travers le dispositif de tamis dissout des collages sur le dispositif de tamis et/ou des impuretés provenant de celui-ci.
